# EUROPEAN PATENT APPLICATION

(11) **EP 0 570 653 A1**
(43) Date of publication of application: **24.11.1993**
(21) Application number: 92830231.4
(22) Date of filing: 18.05.1992
(51) Int. Cl.: A63B 55/08, B62D 51/02, B62K 11/00

(54) **Motor vehicle for golf foreseen its size reduction**

(71) Applicant: Piazzi, Roberto, I-44011 Argenta (Ferrara) (IT)
(72) Inventor: Piazzi, Roberto, I-44011 Argenta (Ferrara) (IT)
(74) Representative: Sassatelli, Franco T., Dr.

(57) **Abstract**

The motor vehicle foresees a frame with three basic parts: a middle part made of the linear scooter (1) with upper couple of parallel support bases (2 and 3) for the player feet, a front part bearing on pin joint the steering column (5) lower down integral with the hub (6) for the wheel (7) and which on the upper part bears a telescopic steering column (9) with the handle-bar (10), and a posterior part made of the motor unit (11) bearing the second wheel (13) and which on couple of joints (14 and 15) bears a kit container (16) and a container (17) for the bag with the clubs and moreover foresees a support (18) integral with the support part (19) supporting the player body during the driving.

## Description

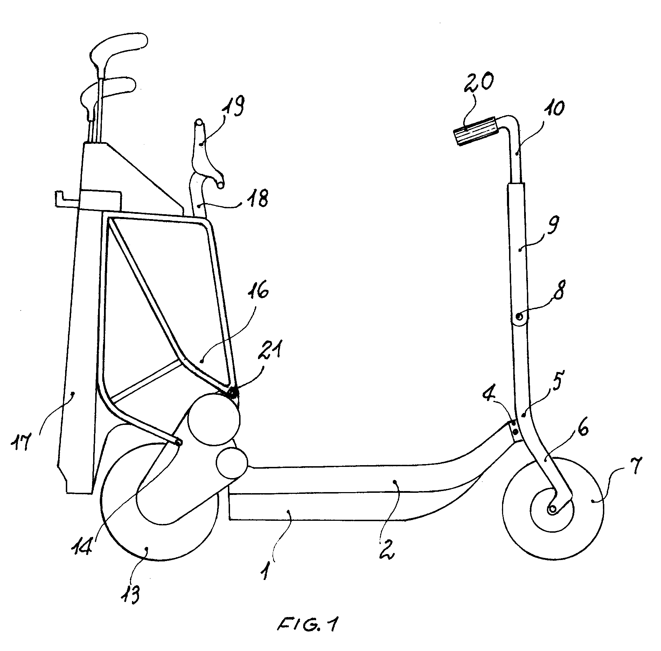

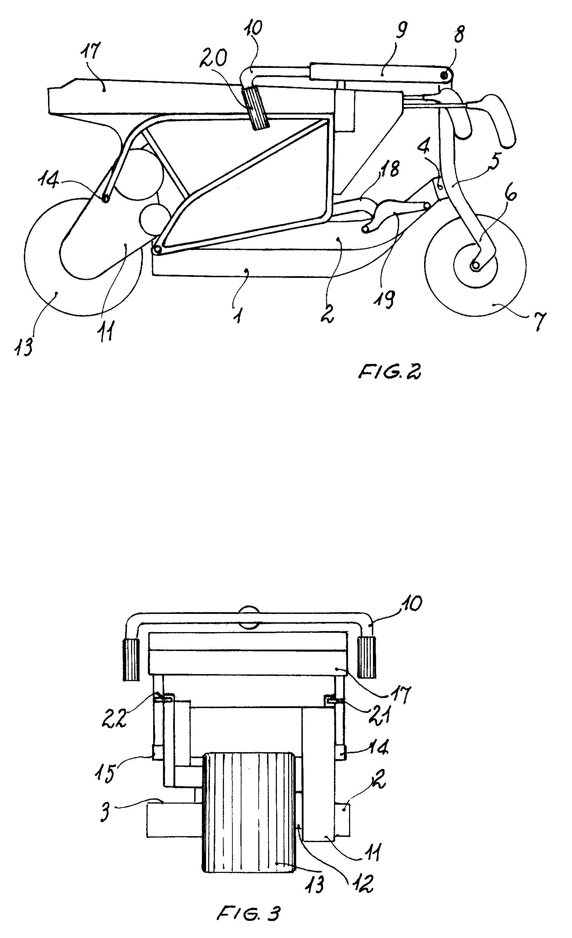

The invention refers to a two-wheeled motor vehicle for the movements on the golf links, equipped for the separated disposition on it of the bag with the clubs and of the kit with clothing and other belongings, which foresees a size reduction of the volume of its body to facilitate during the no use its diposition into a store and in particular to permit its transport into the player motorcar. The current vehicles which are used by the player for the golf are a three or four-wheeled self-moving vehicle which permits the movement from a position to another one and on which can be put the bag with the clubs and all the kit, and also a clubs-holder cart with manual dragging. The first of said vehicles is suitable to completly perform the use necessity but its big dimension and its high cost set a limit for its use and in any case there characteristics presuppose the vehicle standing placing on a sole golf course or its movement on other golf links only by means of another motor vehicle expressly foreseen for the transport or alternatively by means of a carrier. Since however that for the player moves from a golf course to another is a conventional necessity to take part to the different tournaments it is obvious the high cost that for the same payer comes to create the fact to use a such self-moving transport vehicle. The invention, by means of a new transport, motor vehicle, realizes a basic structural semplification using a new motor vehicle characterized by a scooter frame with two wheels foreseen separated housing for the bag with the clubs and for the various kit which permits a big manufacture cost reduction, a big reduction of the vehicle weight and dimension and during the no use permits, by combined overturning of its parts to outline re-entry acting for the frame compactment, its disposition with reduction of its size to can put it into the boot or in other part of the player motorcar, so to avoid for the same the necessity to must foresee in other way for the transport. The originality of the invented vehicle consists of its particular linear frame on which the player comes to place in upright position being this position keeping permits by a posterior support part. For the driving the player graps the handle-bar and, removed the vehicle stabilization device acting in stop, brings the foot which is side to the scooter on its support base and he places himself with the posterior part of his body against the support part so holding the vehicle in slightly slanting position on the other foot on the ground to determine a balance condition. The player drives then the start by a handle-bar grip and brings the food stil on the ground on the other support base foreseen on the scooter frame so determining a balance disposition and consequently the vehicle advancement. At the end of the way to run along, the player brings in sequence on the ground the two feet and he puts the vehicle in stopping. Substantially the vehicle foresees a frame made of three basic parts which overturn themself put into effect the size reduction of the same vehicle. The middle part, made of the linear scooter 1 with upper couple of parallel support bases 2 and 3 for the player feet, foresees in front a pin joint 4 bearing the steering column 5 lower down integral with the hub 6 for the wheel 7. On the upper part said steering column 5 bears on joint 8 a telescopic steering column 9 with the handle-bar 10. On the back the scooter 1 is integral with a unit 11, foreseen also a motor reduction-gear, bearing on shaft 12 the other wheel 13. Said unit 11 on couple of joints 14 and 15 supports a kit container 16 and a container 17 for the bag with the clubs and foresees the support 18 integral with the support part 19 supporting the player body during the driving. For the driving the player at first brings one foot on the relative support base of the scooter and with the other foot still on the ground starts the motor rotated the acceleration grip 20; then he brings also the other foot on the other support base. At the end of the way to run along the grip 20 is taken again in starting position and, by means of an autobrake or other mechanical means, the vehicle movement is stopped and the same vehicle is held in slanting position toward the foot on the ground. For the size reduction which permits the vehicle loading on the motorcar, the pins 21 and 22 are unscrewed and is brought in rotation on the scooter 1 the unit 11 consists of the kit container 16, of the container 17 for the clubs and of the support 18. By means of fitting knob is the unscrewed the joint 8 and is brought in overturning on the container 17 for the clubs the telescopic steering column 9 bearing the handle-bar 10 so to compact the vehicle on the scooter 1. In a preferred embodiment it is foreseen a vehicle with electric operation and with battery housing into the scooter 1. A version of the vehicle is illustrated in drawings of sheet 1. Fig. 1 is side view of the vehicle ready for the use with the clubs in their position into the container 17. Fig. 2 is side view of the same vehicle of fig. 1 in compactment condition. Fig. 3 is back view of the same vehicle of fig. 1 already in compactment condition. In the realization: the shape of the frame parts, the containers, the motion means, the jointing, driving and blocking devices could be foreseen in different ways.

## Claims

1. Motor vehicle for golf foreseen its size reduction foreseen a middle part made of the linear scooter (1) with upper couple of parallel support bases (2 and 3) for the player feet with in front a pin joint (4) bearing the steering column (5) lower down integral with the hub (6) for the wheel (7) in which on the upper part said steering column (5) bears on joint (8) a telescopic steering column (9) with the handle-bar (10); foreseen on the back to the scooter (1) the unit (11) bearing on shaft (12) the other wheel (13) and with on couple of joints (14 and 15) a kit container (16) and a container (17) for the bag with the clubs and a support (18) integral with the support part (19) supporting the player body during the driving, characterized by the fact that for the driving the player at first brings one foot on the relative support base of the scooter (1) and with the other foot still on the ground starts the motor rotated the acceleration grip (20), then he brings also the other foot on the other support base. At the end of the way to run along the grip (20) is taken again in starting position and, by means of an autobrake or other mechanical means, the vehicle movement is stopped and the same vehicle is held in slantingi position toward the foot on the ground. For the size reduction which permits the vehicle loading on the motorcar, the two pins (21 and 22) are unscrewed and is brought in rotation on the scooter (1) the unit (11) consists of the kit container (16), of the container (17) for the clubs and of the support (18). By mean of fitting knob is then unscrewed the joint (8) and is brought in overturning on the container (17) for the clubs the telescopic steering column (9) bearing the handle-bar (10) so to compact the vehicle on the scooter (1). 2. Motor vehicle for golf foreseen its size reduction, as in claim 1), characterized by the fact that in a preferred embodiment it is foreseen a vehicle with electric operation and with battery housing into the scooter (1).
